# EUROPÄISCHE PATENTSCHRIFT

(11) **EP 2 947 734 B1**
(45) Veröffentlichungstag und Bekanntmachung des Hinweises auf die Patenterteilung: **26.08.2020**
(21) Anmeldenummer: 15168428.9
(22) Anmeldetag: 20.05.2015
(51) Int. Cl.: H02G 3/12

(54) **ELEKTROINSTALLATIONSVORRICHTUNG FÜR DEN BETONBAU**
ELECTRICAL INSTALLATION DEVICE FOR CONCRETE CONSTRUCTION
DISPOSITIF D'INSTALLATION ÉLECTRIQUE POUR LA CONSTRUCTION EN BÉTON

(30) Priorität: 20.05.2014 DE 102014107085
(43) Veröffentlichungstag der Anmeldung: 25.11.2015
(73) Patentinhaber: Günther Spelsberg GmbH & Co. KG, 58579 Schalksmühle (DE)
(72) Erfinder: Edelhoff, Detlef, 58579 Schalksmühle (DE); Zborowski, Zbigniew, 58579 Schalksmühle (DE); Proswitz, André, 58579 Schalksmühle (DE); Spelsberg, Holger, 58579 Schalksmühle (DE)
(74) Vertreter: Michalski Hüttermann & Partner Patentanwälte mbB

(56) Entgegenhaltungen:
- DE-U1-202010 000 544
- JP-A- 2009 171 765
- JP-A- 2011 182 584
- US-A- 3 780 209
- US-A1- 2003 026 093
- US-A1- 2014 021 313

## Beschreibung

Die Erfindung betrifft eine Elektroinstallationsvorrichtung für den Betonbau, zur Installation wenigstens einer elektrotechnischen Einrichtung in einem Betonbauteil, mit einem Installationskörper und wenigstens einer Befestigungseinrichtung, wobei der Installationskörper einen Installationsraum zur Installation der elektrotechnischen Einrichtung bereitstellt und die Befestigungseinrichtung derart ausgestaltet ist, dass sie an einer Bewehrung des Betonbauteils befestigbar ist.

Elektroinstallationsvorrichtungen, wie Elektroinstallationsdosen, werden häufig dazu verwendet, elektrische Einrichtungen, wie Leuchten, Schalter oder Steckdosen in einem Betonbauteil, wie einer Betonwand oder einer Betondecke, unterzubringen. Dazu werden derartige Elektroinstallationsvorrichtungen vor Herstellung der Betonwand bzw. Betondecke z.B. an der Schalung oder der Bewehrung befestigt, so dass nach Einbringen des Betons und Entfernen der Schalung aufgrund der Installationsvorrichtung ein entsprechender Installationsraum in der Wand bzw. Decke zur Verfügung steht.

Sofern es beabsichtigt ist, die Elektroinstallationsvorrichtung an der Bewehrung zu befestigen, ist es aus dem Stand der Technik bekannt, die Elektroinstallationsvorrichtung mit einer zusätzlichen Befestigungseinrichtung zu versehen, die ein einfaches Befestigen an der Bewehrung ermöglicht. Typischerweise sind dazu zwei Befestigungseinrichtungen vorgesehen, die an einander gegenüberliegenden Seiten an der Elektroinstallationsvorrichtung angebracht sind.

Dazu wird exemplarisch verwiesen auf die DE 10 2005 051 596 B4, gemäß der eine Aufnahmedose für Schalter, Steckdosen, Verteilerdosen und dergleichen mit U- oder V-förmigen Befestigungsflügeln vorgesehen ist. Mittels dieser Befestigungsflügel kann die Aufnahmedose an der Bewehrung mit Rödeldraht befestigt werden. Problematisch bei dieser Dose ist jedoch, dass beim Feströdeln mit dem Draht die Dose mit einer Hand gehalten werden muss, was den Befestigungsvorgang erschwert.

Dem versucht die aus der DE 20 2010 000 544 U1 bekannte Installationsdose dadurch abzuhelfen, dass innerhalb des U- bzw. V-förmigen Befestigungsflügels ein Klemmsteg vorgesehen ist. Auf diese Weise kann vor dem Befestigen der Installationsdose an der Bewehrung mit Hilfe von Draht ein Anklemmen der Installationsdose an der Bewehrung erfolgen, so dass danach für die Drahtbefestigung kein Festhalten der Dose von Hand mehr erforderlich ist und beide Hände zur Verfügung stehen.

Bei der aus der DE 20 2010 000 544 U1 bekannten Dose ist das Befestigen an der Bewehrung jedoch relativ aufwändig, da es dazu erforderlich ist, den Klemmsteg von Hand zu verbiegen, um ein Aufschieben auf die Bewehrung zu ermöglichen. Erschwerend kommt dabei hinzu, dass die Dose mit zwei Befestigungsflügeln versehen ist, so dass gleichzeitig zwei Klemmstege so verbogen werden müssen, dass die Dose auf die Bewehrung aufgeschoben werden kann.

Aus der US 2014/0021313 A1 ist eine Halterungsanordnung bekannt, mit einem ersten und einem zweiten Rahmen, wobei die Rahmen zueinander beweglich sind und zwischen einer eingezogenen Rahmen Position und einer ausgezogenen Rahmen Position bewegt werden können, um den Rahmen in einer Öffnung einer Trockenbauwand zu fixieren. An der Oberkante des ersten Rahmens angebrachte Flansche verlaufen dabei aufwärtsgerichtet, sowie an der Unterkante des zweiten Rahmens angebrachte Flansche abwärtsgerichtet. Die Flansche sind durch einen Abstand in Abhängigkeit von der Dicke der Wand voneinander entfernt, um die Rahmen in der Öffnung der Trockenbauwand zu halten und die Wand innerhalb der Flansche festzuklemmen.

Aus der JP 2009-171765 A ist eine Installationsvorrichtung zur Befestigung einer Dose an Bewehrungsstäben bekannt. An der Rückseite der Dose ist eine Befestigungsklammer angebracht, die es vor dem Betonieren erlaubt, die Dose an den Bewehrungsstäben zu befestigen. Die Befestigungsklammer weist zu diesem Zweck an einem Ende eine Klammer zum Halten der Dose an einem Bewehrungsstab und an dem anderen Ende einen Befestigungsabschnitt auf, welcher die Befestigungsklammer an einem Bewehrungsstab fixiert.

Aus der JP 2011-182584 A ist ein höhenverstellbares Element zum Andrücken von Verbindungsstücken an die Schalung von Betonbauteilen bekannt, wobei das Element mittels einer Befestigungsklammer an Bewehrungsstäben befestigt wird. Zusätzlicher Stand der Technik ist in US3780209A zu finden.

Ausgehend davon ist es die Aufgabe der Erfindung, eine derartige Elektroinstallationsvorrichtung für den Betonbau anzugeben, die einfach und verlässlich an einer Bewehrung befestigbar ist.

Diese Aufgabe wird durch den Gegenstand des Patentanspruchs 1 gelöst. Bevorzugte Weiterbildungen sind in den Unteransprüchen angegeben.

Erfindungsgemäß ist damit eine Elektroinstallationsvorrichtung für den Betonbau vorgesehen, zur Installation wenigstens einer elektrotechnischen Einrichtung in einem Betonbauteil, mit einem Installationskörper und wenigstens einer Befestigungseinrichtung, wobei der Installationskörper einen Installationsraum zur Installation der elektrotechnischen Einrichtung bereitstellt und die Befestigungseinrichtung derart ausgestaltet ist, dass sie an einer Bewehrung des Betonbauteils befestigbar ist, dadurch gekennzeichnet, dass die Befestigungseinrichtung wenigstens zwei Klemmschenkel aufweist, die von dem Installationskörper derart abragen und dabei in zwei voneinander verschiedenen Ebenen verlaufen, dass sie zwischen einander zum Aufschieben auf einen Teil der Bewehrung einen offenen bzw. sich beim Aufschieben auf die Bewehrung automatisch öffnenden Klemmraum bilden.

Es ist damit ein maßgeblicher Aspekt der Erfindung, dass die beiden Klemmschenkel in unterschiedlichen Ebenen verlaufen, so dass sie von sich aus, also ohne Zutun eines Verwenders der Elektroinstallationsvorrichtung, bereits einen derartigen Klemmraum bilden, der bereits offen ist oder aber sich beim Aufschieben auf die Bewehrung automatisch öffnet. Dies macht den Einsatz der erfindungsgemäßen Elektroinstallationsvorrichtung besonders einfach, da kein separates Öffnen des Klemmraums durch den Verwender von Hand erfolgen muss.

Gemäß einer bevorzugten Weiterbildung der Erfindung ist vorgesehen, dass die Klemmschenkel relativ zueinander federnd ausgebildet sind. Auf diese Weise ist die Anbringung der Elektroinstallationsvorrichtung an Bewehrungsstäbe mit unterschiedlichen Durchmessern möglich, ohne dass es der Auswahl einer auf bestimmte Weise dimensionierten Elektroinstallationsvorrichtung ankäme. Bei dickeren Bewehrungsstäben werden nämlich die Klemmschenkel gemäß dieser bevorzugten Weiterbildung einfach beim Aufschieben automatisch weiter aufgespreizt.

Grundsätzlich ist es möglich, dass beide Klemmschenkel direkt an dem Installationskörper befestigt sind. Gemäß einer bevorzugten Weiterbildung der Erfindung ist jedoch vorgesehen, dass nur einer der beiden Klemmschenkel direkt an dem Installationskörper befestigt ist. Dies kann zum einen die Herstellung der Elektroinstallationsvorrichtung erleichtern und bietet darüber hinaus die Möglichkeit, eine Mehrzahl von nachfolgend beschriebenen Vorteilen zu erzielen.

Erfindungsgemäß ist ferner vorgesehen, dass die beiden Klemmschenkel dadurch gebildet sind, dass die Befestigungseinrichtung S-förmig ausgestaltet ist. In diesem Zusammenhang sieht eine bevorzugte Ausgestaltung vor, dass die Befestigungseinrichtung in einem ersten Abschnitt von dem Ort ihrer Befestigung an dem Installationskörper von diesem abragt, danach um 180° umgebogen ist, um in einem zweiten Abschnitt wieder in Richtung hin zum Installationskörper zu verlaufen, wobei schließlich im Abstand von dem Installationskörper eine weitere Umbiegung um 180° vorgesehen ist, so dass die Befestigungseinrichtung in einem dritten Abschnitt wieder von dem Installationskörper weg verläuft. Die beiden Klemmschenkel sind dann der zweite sowie der dritte Bereich der Befestigungseinrichtung, zwischen denen der Klemmraum gebildet ist.

Bei einer derartigen Konstruktion, aber auch ansonsten, kann vorgesehen sein, dass beide Klemmschenkel gleich lang sind, also insbesondere kein Klemmschenkel den anderen überragt. Gemäß einer bevorzugten Weiterbildung der Erfindung ist jedoch vorgesehen, dass ein Klemmschenkel, bei der zuvor beschriebenen Ausgestaltung der Befestigungseinrichtung vorzugsweise der am Installationskörper befestigte Klemmschenkel, kürzer ist als der andere Klemmschenkel. Damit ist gemeint, dass ein Klemmschenkel den anderen überragt, also weiter von dem Installationskörper abragt als der andere. Eine derartige Konstruktion kann Vorteile bei der Handhabung der Elektroinstallationsvorrichtung zur Befestigung an der Bewehrung haben und darüber hinaus vorteilhaft sein bei der nachfolgenden Anbringung des Rödeldrahts.

Besonders vorteilhaft ist es nun, wenn der direkt am Installationskörper befestigte Klemmschenkel im Bereich seiner Befestigung am Installationskörper elastisch ist. Auf diese Weise ist es nämlich möglich, die komplette Befestigungseinrichtung relativ zu dem Installationskörper zu verbiegen bzw. zu verschwenken, was vorteilhaft bei der Anbringung der Elektroinstallationsvorrichtung an den Bewehrungsstäben sein kann.

Grundsätzlich kann der Installationskörper lösbar an der Befestigungseinrichtung befestigt sein. Gemäß einer bevorzugten Weiterbildung der Erfindung ist jedoch vorgesehen, dass die Befestigungseinrichtung und der Installationskörper einstückig ausgebildet sind. Dies erleichtert nicht nur die Herstellung, sondern macht die Elektroinstallationsvorrichtung insgesamt auch stabiler.

Es ist nicht zwingend erforderlich, dass separate Öffnungen zur Aufnahme von Rödeldraht an der Befestigungsvorrichtung vorgesehen sind. Gemäß einer bevorzugten Weiterbildung der Erfindung ist jedoch vorgesehen, dass die Befestigungseinrichtung wenigstens eine Öffnung zur Aufnahme von Rödeldraht aufweist. Auf diese Weise wird gewährleistet, dass der angebrachte Rödeldraht die Elektroinstallationsvorrichtung sicher hält und diese mit ihrer Befestigungseinrichtung z.B. nicht aus einer Drahtschlaufe herausrutschen kann.

Weiterhin ist es grundsätzlich möglich, dass der Installationskörper bereits eine vollständige Installationsdose darstellt, vorzugsweise in Form einer einstückig mit der Befestigungseinrichtung verbundenen Dose. Eine derartige Installationsdose weist im Allgemeinen ein Grundgehäuse und einen Deckel zum Verschließen des Grundgehäuses auf. Alternativ dazu kann als Installationskörper eine Durchführung für elektrische Leiter vorgesehen ist, insbesondere z.B. ein Durchführungsrohr zur Durchführung von Kabeln durch eine Betonwand.

Besonders universell einsetzbar wird die Elektroinstallationsvorrichtung jedoch dadurch, dass der Installationskörper eine Anschlusseinrichtung für den Anschluss eines Installationsdosenbauteils aufweist. Damit ist also ein modularer Aufbau der Elektroinstallationsvorrichtung vorgesehen, indem dieser nur einen Installationskörper zur Anbringung weiterer Bauteile und natürlich die Befestigungseinrichtung aufweist. Auf diese Weise ist es möglich, mit einer einzigen Elektroinstallationsvorrichtung unterschiedliche Elektroinstallationsdosen zu gestalten, indem nämlich einfach unterschiedliche Installationsdosenbauteile an der Anschlusseinrichtung angebracht werden. Dies ermöglicht einen universellen Einsatz und erleichtert die Lagerhaltung.

Grundsätzlich kann der Klemmraum zwischen den beiden Klemmschenkeln glatte Wände aufweisen. Gemäß einer bevorzugten Weiterbildung der Erfindung ist jedoch vorgesehen, dass der Klemmraum mit Riffelungen versehen ist. Insbesondere ist es auf diese Weise möglich, solche Riffelungen bereitzustellen, die an den Durchmesser der jeweils eingesetzten Bewehrungsstäbe angepasst ist, was die Fixierung der Elektroinstallationsvorrichtung an der Bewehrung verbessert.

Schließlich ist es grundsätzlich möglich, die Elektroinstallationsvorrichtung mit nur einer Befestigungseinrichtung zu versehen. Gemäß einer bevorzugten Weiterbildung der Erfindung sind jedoch zwei Befestigungseinrichtungen vorgesehen, und zwar vorzugsweise an einander gegenüberliegenden Seiten des Installationskörpers. Auf diese Weise wird es insbesondere ermöglicht, die Elektroinstallationsvorrichtung zwischen parallel zueinander verlaufenden Bewehrungsstäben zu befestigen, die links und rechts bzw. oberhalb und unterhalb des Installationskörpers verlaufen.

Die Erfindung wird im Folgenden unter Bezugnahme auf die Zeichnung anhand eines bevorzugten Ausführungsbeispiels näher erläutert.

In der Zeichnung zeigen
- Figur 1a-c: eine Elektroinstallationsvorrichtung in Vorderansicht, Seitenansicht und Rückansicht gemäß einem bevorzugten Ausführungsbeispiel der Erfin-dung,
- Figur 2: die Elektroinstallationsvorrichtung gemäß dem bevorzugten Ausführungsbeispiel der Erfindung in einer perspektivischen Darstellung mit weiteren Installationsdosenbauteilen und
- Figur 3a-c: die Installation der Elektroinstallationsvorrichtung gemäß dem bevorzugten Ausführungsbeispiel der Erfindung an Bewehrungsstäben in perspektivischer Darstellung.

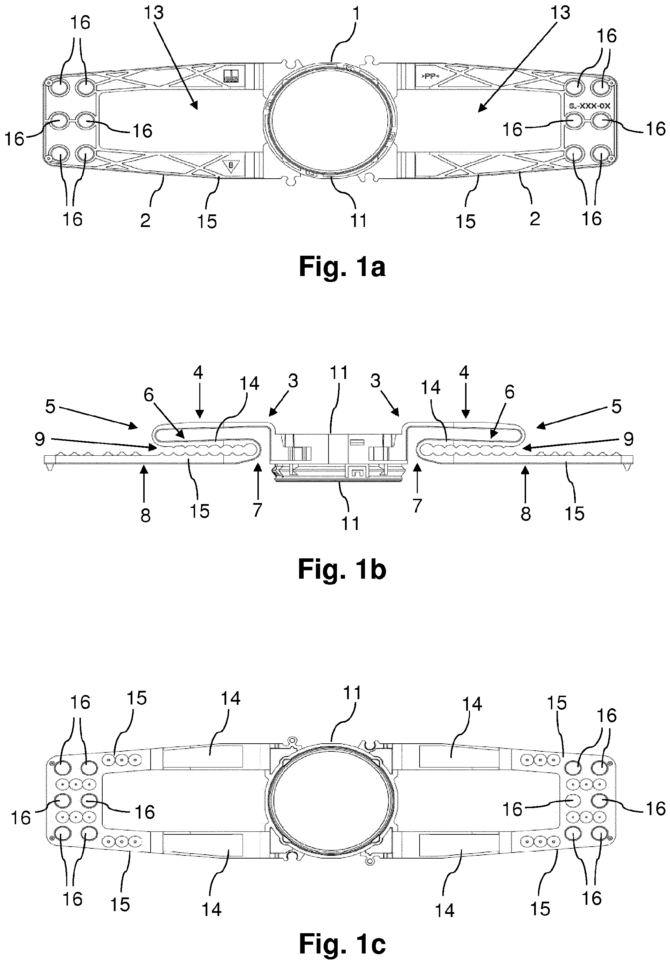

Wie aus Figur 1a ersichtlich, die eine Vorderansicht einer Elektroinstallationsvorrichtung gemäß einem bevorzugten Ausführungsbeispiel der Erfindung zeigt, weist die Elektroinstallationsvorrichtung einen Installationskörper 1 und zwei Befestigungseinrichtungen 2 auf. Die Befestigungseinrichtungen 2 sind in dieser Ansicht U-förmig, sind also an zwei voneinander beabstandeten Stellen an dem Installationskörper 1 befestigt und weisen ein innere Öffnung 13 auf.

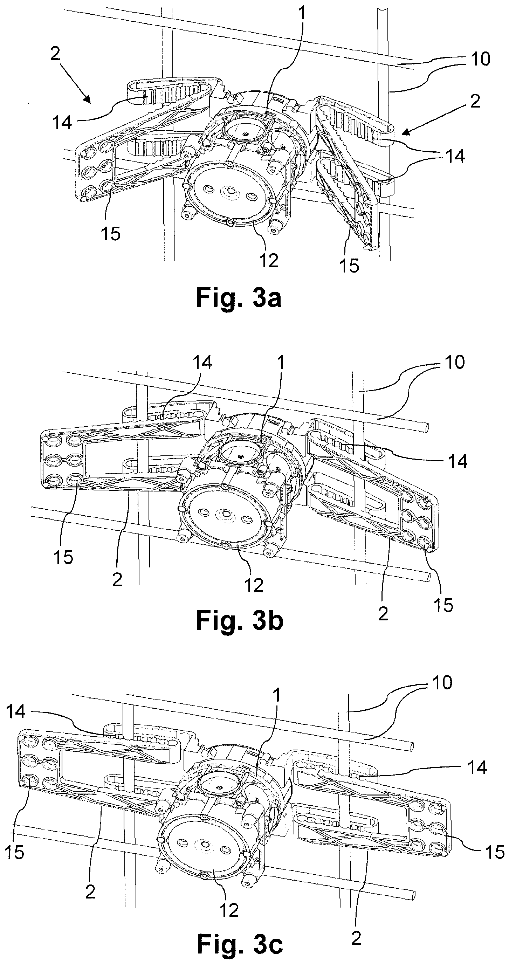

Wie insbesondere aus Figur 1b ersichtlich, die eine Seitenansicht der Elektroinstallationsvorrichtung gemäß dem bevorzugten Ausführungsbeispiel der Erfindung zeigt, sind die Befestigungseinrichtungen 2 in dieser Seitenansicht S-förmig. Ausgehend von einem Befestigungsbereich 3, in dem die jeweilige Befestigungseinrichtung 2 am Installationskörper 1 befestigt ist, ragen die Befestigungseinrichtungen 2 von dem Installationskörper 1 ab und bilden dabei einen ersten Bereich 4. Nach einer ersten Umlenkung 5 um 180° verlaufen die Befestigungseinrichtungen 2 dann wieder zum Installationskörper hin und bilden dabei einen zweiten Bereich 6. Nach einer zweiten Umlenkung 7 um 180° verlaufen die Befestigungseinrichtungen 2 dann in einem jeweiligen dritten Bereich 8 wieder weg vom Installationskörper 1. Ein erster Klemmschenkel 14 einer jeweiligen Befestigungseinrichtung 2 wird damit vom zweiten Bereich 6 gebildet, und ein zweiter Klemmschenkel 15 wird vom dritten Bereich 8 gebildet. Zwischen diesen beiden Klemmschenkeln 14, 15 ist damit ein nach außen hin offener Klemmraum 9 gebildet. Dieser ist geriffelt, wie insbesondere aus Figur 1b ersichtlich, was ein sicheres Festklemmen auf z.B. in Figur 3 gezeigte Bewehrungsstäben 10 ermöglicht.

Den Figuren 1b und 1c ist auch entnehmbar, dass der eine Klemmschenkel 14, gebildet durch den Bereich 6 der Befestigungseinrichtung 2, kürzer ist als der andere Klemmschenkel 15, der vom dritten Bereich 8 der Befestigungseinrichtung 2 gebildet wird. Dies ermöglicht eine Handhabung der Elektroinstallationsvorrichtung bei der Installation an einer Bewehrung, wie im Detail weiter unten unter Bezugnahme auf die Fig. 3a-c erläutert. Ferner sind in Figuren 1a und 1c Öffnungen 16 gezeigt, mit Hilfe derer Rödeldraht zur Befestigung an den Bewehrungsstäben 10 besonders einfach und sicher befestigt werden kann.

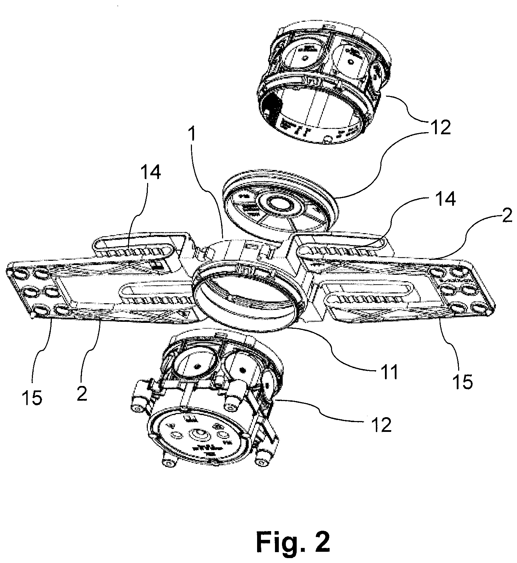

Aus den Figuren 1a und 1c sowie aus der Figur 2 ist ersichtlich, dass die Elektroinstallationsvorrichtung gemäß dem vorliegend beschriebenen bevorzugten Ausführungsbeispiel der Erfindung modular zu einer Elektroinstallationsdose ausgebaut werden kann. Dazu weist der Installationskörper 1 an seiner Vorderseite sowie an seiner Rückseite jeweils eine Anschlusseinrichtung 11 auf, mittels derer weitere Installationsdosenbauteile 12 an dem Installationskörper 1 lösbar befestigt werden können. Diese Befestigung kann dabei reib- und/oder formschlüssig sein, z.B. mittels Bajonett-Verschluss, Verschraubung oder einfacher Klemmung. Insbesondere können dabei bei Bereitstellung nur einer einzigen immer gleichen Elektroinstallationsvorrichtung auf einfache Weise eine Vielzahl von unterschiedlichen Elektroinstallationsdosen erzielt werden, die sich von Form und Größe her unterscheiden, je nachdem was für Installationsdosenbauteile 12 installiert werden.

Die Vorgehensweise zur Befestigung der Elektroinstallationsvorrichtung gemäß dem bevorzugten Ausführungsbeispiel der Erfindung ist nun aus den Figuren 3a-c ersichtlich: In einem ersten Schritt werden die beiden längeren Klemmschenkel 15, gebildet durch die dritten Bereiche 8 der Befestigungseinrichtungen 2, gefasst und nach vorne gebogen. Dadurch, dass die Befestigungseinrichtungen 2 in ihrem Bereich 3, in dem sie jeweils an dem Installationskörper 1 befestigt sind, flexibel ausgestaltet sind, kommt es dabei zu einem Verschwenken der Befestigungseinrichtungen 2 insgesamt nach vorne.

In dieser Stellung kann die Elektroinstallationsvorrichtung dann zwischen zwei Bewehrungsstäbe 10 geschoben werden, wobei es dabei schließlich dazu kommt, dass der hintere Klemmschenkel 14, gebildet durch den zweiten Bereich 6 der Befestigungseinrichtungen 2, hinter die Bewehrungsstäbe 10 gerät. Damit sind die Klemmschenkel 14, 15 mit ihren nach außen hin offenen Klemmräumen 9 bereits auf die Bewehrungsstäbe 10 aufgeschoben. Jetzt kann nochmals der Installationskörper 1 oder ein daran angebrachtes Installationsdosenbauteil 12 von Hand gefasst werden, um die Elektroinstallationsvorrichtung insgesamt wieder etwas nach vorne zu ziehen, so dass es zu einer im Wesentlichen parallelen Ausrichtung der beiden Klemmschenkel 14, 15 relativ zu den Bewehrungsstäben 10 kommt. Die Elektroinstallationsvorrichtung gemäß dem bevorzugten Ausführungsbeispiel der Erfindung ist nun derart an den Bewehrungsstäben 10 befestigt, dass sie nicht weiter von Hand gehalten werden muss und eine Befestigung mittels Rödeldraht mit beiden Händen erfolgen kann.

Damit wird eine Elektroinstallationsvorrichtung angegeben, die als Baukastensystem ausgestaltet ist, so dass auf einfache Weise unterschiedlichste Elektroinstallationsdosen verwirklicht werden können. Die Montage der Elektroinstallationsdose selbst ist einfach, wie auch die Anbringung der gesamten Vorrichtung an eine Bewehrung eines Betonbauteils. Aufgrund der besonderen Ausgestaltung der Befestigungseinrichtungen ist eine schnelle Vorfixierung der Vorrichtung möglich, so dass nachfolgend beide Hände zur Befestigung mit Rödeldraht zur Verfügung stehen.

### Bezugszeichenliste

- 1: Installationskörper
- 2: Befestigungseinrichtung
- 3: Befestigungsbereich
- 4: erster Bereich
- 5: erste Umlenkung
- 6: zweiter Bereich
- 7: zweite Umlenkung
- 8: dritter Bereich
- 9: Klemmraum
- 10: Bewehrungsstäbe
- 11: Anschlusseinrichung
- 12: Installationsdosenbauteile
- 13: Öffnungen in den Befestigungseinrichtungen
- 14: erster Klemmschenkel
- 15: zweiter Klemmschenkel
- 16: Öffnungen für Draht

## Patentansprüche

1. Elektroinstallationsvorrichtung für den Betonbau, zur Installation wenigstens einer elektrotechnischen Einrichtung in einem Betonbauteil, mit einem Installationskörper (1) und wenigstens einer Befestigungseinrichtung (2), wobei der Installationskörper (1) einen Installationsraum zur Installation der elektrotechnischen Einrichtung bereitstellt und die Befestigungseinrichtung (2) derart ausgestaltet ist, dass sie an einer Bewehrung (10) des Betonbauteils befestigbar ist, indem die Befestigungseinrichtung (2) wenigstens zwei Klemmschenkel (14, 15) aufweist, die von dem Installationskörper (1) derart abragen und dabei in zwei voneinander verschiedenen Ebenen verlaufen, dass sie zwischen einander zum Aufschieben auf einen Teil der Bewehrung (10) einen offenen bzw. sich beim Aufschieben auf die Bewehrung (10) automatisch öffnenden Klemmraum (9) bilden, **dadurch gekennzeichnet, dass** nur einer der beiden Klemmschenkel (14, 15) direkt an dem Installationskörper (2) befestigt ist und die beiden Klemmschenkel (14, 15) dadurch gebildet sind, dass die Befestigungseinrichtung (2) S-förmig ausgestaltet ist, indem die Befestigungseinrichtung (2) in einem ersten Bereich (4) von dem Ort ihrer Befestigung an dem Installationskörper (1) von diesem abragt, danach um 180° umgebogen ist, um in einem zweiten Bereich (6) wieder in Richtung hin zum Installationskörper (1) zu verlaufen, wobei im Abstand von dem Installationskörper (1) eine weitere Umbiegung um 180° vorgesehen ist, so dass die Befestigungseinrichtung (2) in einem dritten Bereich (8) wieder von dem Installationskörper (1) weg verläuft, so dass der zweite Bereich (6) und der dritten Bereich (8) der Befestigungseinrichtung (2) die beiden Klemmschenkel (14, 15) bilden, zwischen denen der nach außen hin offene Klemmraum (9) gebildet ist.

2. Elektroinstallationsvorrichtung nach Anspruch 1, **dadurch gekennzeichnet, dass** die Klemmschenkel (14, 15) relativ zueinander federnd ausgebildet sind.

3. Elektroinstallationsvorrichtung nach Anspruch 1 oder 2, **dadurch gekennzeichnet, dass** ein Klemmschenkel (14), vorzugsweise der am Installationskörper (1) befestigte Klemmschenkel (14), kürzer ist als der andere Klemmschenkel (15).

4. Elektroinstallationsvorrichtung nach einem der Ansprüche 1 bis 3, **dadurch gekennzeichnet, dass** der direkt am Installationskörper (2) befestigte Klemmschenkel (14) im Bereich (3) seiner Befestigung am Installationskörper (1) elastisch ist.

5. Elektroinstallationsvorrichtung nach einem der Ansprüche 1 bis 4, **dadurch gekennzeichnet, dass** die Befestigungseinrichtung (2) und der Installationskörper (1) einstückig ausgebildet sind.

6. Elektroinstallationsvorrichtung nach einem der Ansprüche 1 bis 5, **dadurch gekennzeichnet, dass** die Befestigungseinrichtung (2) wenigstens eine Öffnung (16) zur Aufnahme von Rödeldraht aufweist.

7. Elektroinstallationsvorrichtung nach einem der Ansprüche 1 bis 6, **dadurch gekennzeichnet, dass** der Installationskörper (1) eine Anschlusseinrichtung (11) für den Anschluss eines Installationsdosenbauteils (12) aufweist.

8. Elektroinstallationsvorrichtung nach einem der Ansprüche 1 bis 7, **dadurch gekennzeichnet, dass** der Klemmraum (9) mit Riffelungen versehen ist.

## Claims

1. An electrical installation apparatus for concrete construction for installing at least one electrotechniical device in a concrete component, comprising an installation body (1) and at least one fastening device (2), the installation body (1) providing an installation space for installation of the electrical device and the fastening device (2) being designed in such a way that it is fastenable to a reinforcement (10) of the concrete component by virtue of the fact that the fastening device (2) has at least two clamping limbs (14, 15), which protrude from the installation body (1) in such a way, and in so doing run in two different planes, that they form, between them, a clamping space (9) which is open for sliding onto part of the reinforcement (10) or which opens automatically when slid onto the reinforcement (10), **characterised in that** only one of the two clamping limbs (14, 15) is directly fastened to the installation body (2) and the two clamping limbs (14, 15) are formed **in that** the fastening device (2) is S-shaped by virtue of the fact that the fastening device (2), in a first region (4), protrudes from the location of its fastening to the installation body (1) away from the latter, then is turned through 180° so as to run back, in a second region (6), in the direction towards the installation body (1), a further turn through 180° being provided at a distance from the installation body (1) so that the fastening device (2), in a third region (8), runs away again from the installation body (1), so that the second region (6) and the third region (8) of the fastening device (2) form the two clamping limbs (14, 15), between which the outwardly open clamping space (9) is formed.

2. The electrical installation apparatus according to claim 1, **characterised in that** the clamping limbs (14, 15) are resilient relative to one another.

3. The electrical installation apparatus according to claim 1 or 2, **characterised in that** one clamping limb (14), preferably the clamping limb (14) fastened to the installation body (1), is shorter than the other clamping limb (15).

4. The electrical installation apparatus according to any one of claims 1 to 3, **characterised in that** the clamping limb (14) directly fastened to the installation body (2) is elastic in the region (3) of its fastening to the installation body (1).

5. The electrical installation apparatus according to any one of claims 1 to 4, **characterised in that** the fastening device (2) and the installation body (1) are formed in one piece.

6. The electrical installation apparatus according to any one of claims 1 to 5, **characterised in that** the fastening device (2) has at least one opening (16) for receiving binding wire.

7. The electrical installation apparatus according to any one of claims 1 to 6, **characterised in that** the installation body (1) has a connection device (11) for the connection of an installation box component (12).

8. The electrical installation apparatus according to any one of claims 1 to 7, **characterised in that** the clamping space (9) is provided with flutings.

## Revendications

1. Dispositif d'installation électrique pour la construction en béton, permettant l'installation d'au moins un dispositif technique électrique dans un composant en béton, avec un corps d'installation (1) et au moins un dispositif de fixation (2), où le corps d'installation (1) fournit un espace d'installation pour l'installation du dispositif technique électrique et le dispositif de fixation (2) est conçu de telle manière qu'il peut être fixé à une armature (10) du composant en béton en ce que le dispositif de fixation (2) présente au moins deux bras de serrage (14, 15) qui font saillie par rapport au corps d'installation (1) de telle manière et ce faisant, s'étendent dans deux plans différents l'un de l'autre, qu'ils forment entre eux un espace de serrage (9) ouvert, respectivement, s'ouvrant automatiquement lors du glissement sur l'armature (10) pour le glissement sur une partie de l'armature (10), **caractérisé en ce qu'**uniquement un des deux bras de serrage (14, 15) est fixé directement sur le corps d'installation (2) et qu'ainsi les deux bras de serrage (14, 15) sont formés, que le dispositif de fixation (2) est conçu sous forme d'un S **en ce que** le dispositif de fixation (2), dans une première région (4), fait saillie par rapport à l'endroit de sa fixation sur le corps d'installation (1), est ensuite recourbé de 180 °, pour de nouveau s'étendre dans une deuxième région (6) en direction du corps d'installation (1), où une nouvelle courbure de 180 ° est prévue à distance du corps d'installation (1) de sorte que le dispositif de fixation (2) s'étend dans une troisième région (8) en s'éloignant du corps d'installation (1), de sorte que la deuxième région (6) et la troisième région (8) du dispositif de fixation (2) forment les deux bras de serrage (14, 15) entre lesquels l'espace de serrage (9) ouvert vers l'extérieur est formé.

2. Dispositif d'installation électrique selon la revendication 1, **caractérisé en ce que** les bras de serrage (14, 15) sont conçus élastiques l'un par rapport à l'autre.

3. Dispositif d'installation électrique selon la revendication 1 ou la revendication 2, **caractérisé en ce qu'**un bras de serrage (14), de préférence, le bras de serrage (14) fixé sur le corps d'installation (1), est plus court que l'autre bras de serrage (15).

4. Dispositif d'installation électrique selon l'une des revendications 1 à 3, **caractérisé en ce que** le bras de serrage (14) fixé directement sur le corps d'installation (2) est élastique dans la région (3) de sa fixation sur le corps d'installation (1).

5. Dispositif d'installation électrique selon l'une des revendications 1 à 4, **caractérisé en ce que** le dispositif de fixation (2) et le corps d'installation (1) sont conçus d'un seul tenant.

6. Dispositif d'installation électrique selon l'une des revendications 1 à 5, **caractérisé en ce que** le dispositif de fixation (2) présente au moins un orifice (16) pour la réception de fil d'armature.

7. Dispositif d'installation électrique selon l'une des revendications 1 à 6, **caractérisé en ce que** le corps d'installation (1) présente un dispositif de raccordement (11) pour le raccordement d'un composant de boitier d'installation (12) .

8. Dispositif d'installation électrique selon l'une des revendications 1 à 7, **caractérisé en ce que** l'espace de serrage (9) est muni de cannelures.
